# EUROPEAN PATENT APPLICATION

(11) **EP 4 410 640 A1**
(43) Date of publication of application: **07.08.2024**
(21) Application number: 22895175.2
(22) Date of filing: 18.08.2022
(51) Int. Cl.: B62D 25/20, B62D 21/15

(54) **INTERNAL STRUCTURE FOR SIDE SILLS**

(30) Priority: 19.11.2021 JP 2021188333
(71) Applicant: JFE Steel Corporation, Tokyo 100-0011 (JP)
(72) Inventor: AGEBA, Ryo, Tokyo 100-0011 (JP)
(74) Representative: Grünecker Patent- und Rechtsanwälte PartG mbB
(86) International application number: PCT/JP2022/031227
(87) International publication number: WO 2023/089887

(57) **Abstract**

An internal structure 1 of a side sill according to the present invention is an internal structure of a side sill 100 in which an outer member 110 and an inner member 120 each having a hat-shaped cross section are joined to form a closed cross-sectional structure. The internal structure 1 includes a connecting member 10 that connects a flange portion 115a and a flange portion 125a on an upper side of an automotive body and connects a flange portion 115b and a flange portion 125b on a lower side of the automotive body; and a collision energy-absorbing member 20 that absorbs collision energy while transmitting a crashworthiness load input to the outer member 110 to the inner member 120 side, in which the collision energy-absorbing member 20 includes: a first collision energy-absorbing member 21 that forms a linear load transfer path inclined toward a corner portion 127 of the inner member 120 or a vicinity of the corner portion 127; and a second collision energy-absorbing member 23 that is disposed so as to connect the inner member 120 and the connecting member 10.

## Description

### Field

The present invention relates to an internal structure of a side sill that absorbs collision energy when a crashworthiness load is input from the outside of an automotive body in a vehicle width direction.

### Background

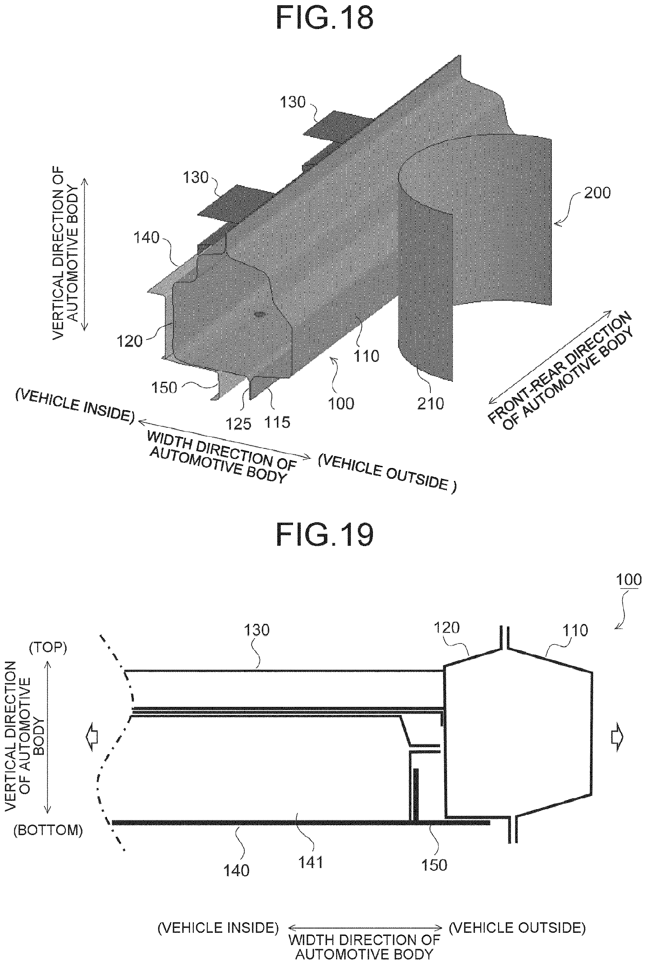

It is expected that the proportion of automobiles loaded with a large-capacity battery (hereinafter, referred to as electric automobiles) such as a battery-powered vehicle (BEV) and a plug-in hybrid electric vehicle (PHEV) in global automobile sales will rapidly increase in the future. One of the structures of an automotive body of an electric automobile that is significantly different from a gasoline engine car and an electric hybrid vehicle (HEV) is the mounting of a large-capacity battery and a protective structure thereof. As illustrated in FIG. 18, a side impact test in which a pole 210 collides from the outside of a vehicle in the automotive body width direction of a side sill 100 is an item for evaluating occupant injury in many car assessments. It can be said that the side impact test is a particularly severe collision mode in terms of battery protection because a load input from the pole 210 to the side sill 100 is a concentrated load and the distance between the collision position and the battery is short.

As illustrated in FIG. 19, an automotive body structure for an electric automobile that protects a battery 141 inside a battery case 140 from collision energy from the outside is provided with the side sill 100 and a plurality of load-bearing members (non-EA members). The side sill 100 is an energy-absorbing member (EA member) that absorbs collision energy when a crashworthiness load is input from the outside in the automotive body width direction. The load-bearing members are members that are not allowed to be deformed in order to prevent a large load from the side sill 100 from being input to the battery case 140, and examples of the load-bearing members include a floor cross member 130 and a battery lower cross member 150 that connects a lower portion of the battery case 140 and the side sill 100 as illustrated in FIG. 19.

The plurality of load-bearing members abuts on the side sill 100 to form a load transfer path for dispersing a crashworthiness load from the collision part of the side sill 100 to the load-bearing members. In order to prevent the battery case 140 from being deformed, it is required to dispose one or a plurality of collision energy-absorbing members (EA members) along the load transfer path. The collision energy-absorbing member needs to have a high-strength structure that can sufficiently absorb collision energy from the outside of the vehicle, and on the other hand, a load transfer to the non-EA members needs to be equal to or less than the loading bearing capacity of those members. In order to fulfill the requirements, it is important to distribute a transfer load from the collision energy-absorbing member (EA member) including the side sill 100 to the load-bearing members (non-EA members).

A vehicle substructure for protecting an automotive body from a side impact is disclosed in, for example, Patent Literature 1 and Patent Literature 2.

### Citation List

### Patent Literature

Patent Literature 1: Japanese Patent No. 6734709
Patent Literature 2: Japanese Patent No. 6757291

### Summary

### Technical Problem

The substructure of the automotive body described in Patent Literature 1 uses an impact absorption member having a hat-shaped cross section, but has a problem that collision energy absorptive properties are insufficient. In addition, the number of parts required to constitute the substructure is large, which also poses a problem in terms of manufacturing cost. Further, in the substructure of the automotive body described in Patent Literature 2, an impact absorption member is disposed at the same height as the battery, which poses a concern that an input load to a battery case is excessive. Further, similarly to the structure described in Patent Literature 1, there is a problem that the number of parts is large.

The present invention has been made to solve the above-described problems, and an object of the present invention is to provide an internal structure of a side sill that is capable of preventing an excessive input load from the side sill to a specific component such as a battery case and preventing an increase in the number of components and manufacturing cost while having sufficient collision energy absorptive properties.

### Solution to Problem

An internal structure of a side sill according to the present invention includes: an outer member extending in a front-rear direction of an automotive body and having a hat-shaped cross section that is open toward an inside of a vehicle in a width direction of the automotive body; an inner member having a hat-shaped cross section that is open toward an outside of the vehicle in the width direction of the automotive body; a closed cross-sectional structure formed by joining an end portion of each of the outer member and the inner member on an upper side of the automotive body and an end portion of each of the outer member and the inner member on a lower side of the automotive body while an open side of the outer member and an open side of the inner member facing each other; a connecting member disposed so as to connect the end portion of each of the outer member and the inner member on the upper side of the automotive body and the end portion of each of the outer member and the inner member on the lower side of the automotive body; and a collision energy-absorbing member configured to absorb collision energy while transmitting a crashworthiness load input to the outer member to the inner member side, the collision energy-absorbing member including: a pair of first collision energy-absorbing members configured to form a linear load transfer path inclined with respect to a horizontal plane of the automotive body to transmit the crashworthiness load input to the outer member toward a corner portion of the inner member in both an upper direction of the automotive body and a lower direction of the automotive body or a vicinity of the corner portion, and absorb the collision energy; and a second collision energy-absorbing member disposed in the first collision energy-absorbing member on each of an upper side of the automotive body and a lower side of the automotive body, and configured to connect the inner member and the connecting member or the end portion, and absorb the collision energy.

Moreover, The collision energy-absorbing member may be formed by bending one plate member, and may be a member in which the first collision energy-absorbing member and the second collision energy-absorbing member are integrated.

Moreover, the first collision energy-absorbing member may have a hat-shaped cross section that is open toward the inside of the vehicle in the width direction of the automotive body and include a pair of vertical wall portions inclined with respect to the horizontal plane of the automotive body.

Moreover, the second collision energy-absorbing member may include two members having a hat-shaped cross section that are open toward the outside of the vehicle in the width direction of the automotive body and arranged side by side in a vertical direction of the automotive body, two vertical wall portions on a center side in the vertical direction of the automotive body, among vertical wall portions of the two members having a hat-shaped cross section, may form a part of the first collision energy-absorbing member, and two vertical wall portions on the upper direction of the automotive body and the lower direction of the automotive body, among the vertical wall portions of the two members having a hat-shaped cross section, may form the second collision energy-absorbing member.

Moreover, the connecting member may be made of one plate member, and may be joined to the first collision energy-absorbing member to divide the load transfer path into the outer member side and the inner member side.

Moreover, the connecting member may include a plurality of strip-shaped plate members extending in the vertical direction of the automotive body, and may be disposed so as to penetrate the first collision energy-absorbing member and the second collision energy-absorbing member.

Moreover, the first collision energy-absorbing member may have a groove-shaped portion formed along the load transfer path.

### Advantageous Effects of Invention

In the present invention, a connecting member disposed so as to connect the end portion of each of the outer member and the inner member of the side sill on the upper side of the automotive body and the end portion of each of the outer member and the inner member on the lower side of the automotive body; and a collision energy-absorbing member that absorbs collision energy while transmitting a crashworthiness load input to the outer member to the inner member side are included, in which the collision energy-absorbing member includes a pair of first collision energy-absorbing members that forms a linear load transfer path inclined with respect to a horizontal plane of the automotive body in order to transmit the crashworthiness load input to the outer member toward a corner portion of the inner member in both an upper direction of the automotive body and a lower direction of the automotive body or a vicinity of the corner portion, and absorbs the collision energy; and a second collision energy-absorbing member that is disposed in the first collision energy-absorbing member on each of an upper side of the automotive body and a lower side of the automotive body, connects the inner member and the connecting member or the end portion, and absorbs the collision energy. As a result, the crashworthiness load input to the outer member is distributed and transmitted to load-bearing members such as a floor cross member and a battery case of the automotive body, and the first collision energy-absorbing member and the second collision energy-absorbing member forming the load transfer path are efficiently crushed, so that the absorption efficiency of the collision energy can be enhanced. In that case, even after the first collision energy-absorbing member and the second collision energy-absorbing member are crushed and bent, the first collision energy-absorbing member and the second collision energy-absorbing member are supported by the corner portions of the inner member in both the upper direction of the automotive body and the lower direction of the automotive body, so that the effect described above is maximized. In addition, according to the above configuration, even with a simple structure in which the number of components is small, it is possible to achieve weight reduction while ensuring high collision energy absorptive performance. Further, a structure is used in which the first collision energy-absorbing member of the collision energy-absorbing member is disposed so as to cross the connecting member to be divided into the outer member side and the inner member side of the side sill and a plurality of closed cross-sectional structures is formed inside the side sill, resulting in further increase in crashworthiness energy absorption amount.

### Brief Description of Drawings

FIG. 1 is a cross-sectional view illustrating a configuration of an internal structure of a side sill according to an embodiment of the present invention (part 1) .
FIG. 2 is a cross-sectional view illustrating the configuration of the internal structure of the side sill according to the embodiment of the present invention (part 2) .
FIG. 3 is a diagram illustrating a method for joining a collision energy-absorbing member and a connecting member in the internal structure of the side sill according to the embodiment of the present invention.
FIG. 4 is a diagram illustrating an example of a deformed state at the time of a side impact in the internal structure of the side sill according to the embodiment of the present invention ((a) perspective view and (b) front view from a front-rear direction of an automotive body).
FIG. 5 is a diagram illustrating another aspect of the internal structure of the side sill according to the embodiment of the present invention (part 1).
FIG. 6 is a diagram illustrating another aspect of the internal structure of the side sill according to the embodiment of the present invention (part 2) ((a) perspective view, (b) A-A cross-sectional view, and (c) B-B cross-sectional view).
FIG. 7 is a diagram illustrating an example of a deformed state at the time of a side impact in another aspect of the internal structure of the side sill according to the embodiment of the present invention (part 1) ((a) perspective view, (b) front view from a front-rear direction of an automotive body).
FIG. 8 is a diagram illustrating another aspect of the internal structure of the side sill according to the embodiment of the present invention (part 3).
FIG. 9 is a diagram illustrating an example of a deformed state at the time of a side impact in another aspect of the internal structure of the side sill according to the embodiment of the present invention (part 2).
FIG. 10 is a perspective view illustrating a configuration of an internal structure of a side sill according to an invention example in an example ((a) first invention example and (b) second invention example).
FIG. 11 is a cross-sectional view illustrating a configuration of an internal structure of a side sill according to an invention example in an example ((a) first invention example, (b) second invention example, and (c) third invention example).
FIG. 12 is a diagram illustrating a maximum crush stroke of a pole that makes a side impact toward the side sill in an example.
FIG. 13 is a perspective view illustrating a configuration of an internal structure of a side sill according to a comparative example for comparison in an example ((a) first comparative example, (b) second comparative example, and (c) third comparative example).
FIG. 14 is a cross-sectional view illustrating a configuration of an internal structure of a side sill according to a comparative example for comparison in an example ((a) first comparative example, (b) second comparative example, and (c) third comparative example).
FIG. 15 is a cross-sectional view illustrating a configuration of an internal structure of a side sill according to a comparative example for comparison in an example ((a) fourth comparative example, (b) fifth comparative example, and (c) sixth comparative example).
FIG. 16 is a cross-sectional view illustrating a configuration of an internal structure of a side sill according to a comparative example for comparison in an example ((a) seventh comparative example, (b) eighth comparative example, and (c) ninth comparative example).
FIG. 17 is a graph illustrating, in an example, impact performance of side sills according to first to third invention examples and first to ninth comparative examples ((a) relationship between a crashworthiness energy absorption amount and a crush stroke, (b) relationship between a crashworthiness energy absorption amount and a weight of the internal structure of the side sill, and (c) relationship between a crashworthiness energy absorption amount and the number of members constituting the internal structure of the side sill).
FIG. 18 is a diagram illustrating a side impact test for a side sill of an automotive body.
FIG. 19 is a diagram illustrating a configuration of a conventional side sill and a vicinity thereof.

### Description of Embodiments

Prior to describing an embodiment of the present invention, a configuration of a side sill to which the present invention is applied will be described. In the following description, terms relating to directions and arrangements such as the front-rear direction of the automotive body, the width direction of the automotive body, the vertical direction of the automotive body, the outside of the automotive body, and the inside of the automotive body represent positional relationships in a state of being attached to the automotive body of the automobile. In addition, constituent elements having the same function are denoted by the same reference numerals, and redundant descriptions will be omitted. Further, in the drawings of the present application, an X direction, a Y direction, and a Z direction indicate the front-rear direction of the automotive body, the width direction of the automotive body, and the vertical direction of the automotive body, respectively.

### <Side sill to which the present invention is applied>

As illustrated in FIG. 18 described above, a side sill 100 to which the present invention is applied includes an outer member 110 and an inner member 120. The outer member 110 extends in the front-rear direction of the automotive body and has a hat-shaped cross section that is open toward the inside of the vehicle in the width direction of the automotive body, and the inner member 120 has a hat-shaped cross section that is open toward the outside of the vehicle in the width direction of the automotive body.

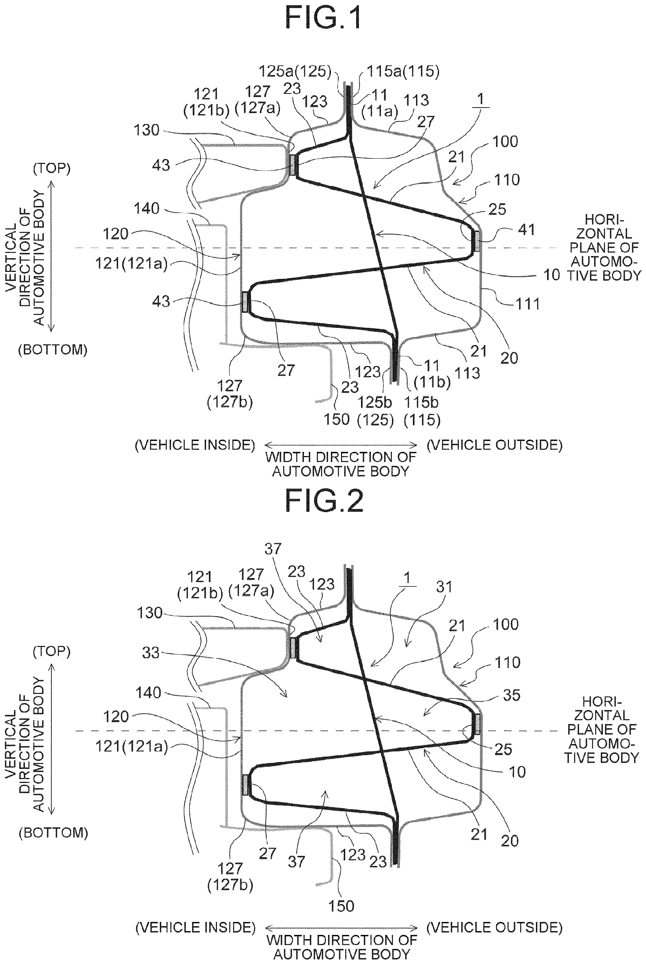

As illustrated in FIG. 1, the outer member 110 has a hat-shaped cross section including a top portion 111, a vertical wall portion 113, and a flange portion 115. As illustrated in FIG. 1, the inner member 120 has a hat-shaped cross section including a top portion 121 (first top portion 121a and second top portion 121b), a vertical wall portion 123, and a flange portion 125, and the top portion 121 and the vertical wall portion 123 are connected via a corner portion 127.

The outer member 110 and the inner member 120 are joined by a flange portion 115a and a flange portion 125a which are end portions on the upper side of the automotive body and a flange portion 115b and a flange portion 125b which are end portions on the lower side of the automotive body, to thereby form a closed cross-sectional structure.

Further, a floor cross member 130 is connected to the inner member 120 of the side sill 100 on the upper side of the automotive body, and a battery case 140 is connected to the inner member 120 on the lower side in the vertical direction of the automotive body via a battery lower cross member 150.

The floor cross member 130, the battery case 140, and the battery lower cross member 150 are required not to be deformed with a predetermined load bearing capacity even in a side impact in which a crashworthiness load is input to the side surface of the side sill 100 in the width direction of the automotive body. The battery lower cross member 150 is connected to the battery case 140.

### <Internal structure of side sill>

As illustrated in FIG. 1 as an example, an internal structure 1 of the side sill according to an embodiment of the present invention is an internal structure of the side sill 100 including the outer member 110 and the inner member 120, and includes a connecting member 10 and a collision energy-absorbing member 20.

As illustrated in FIG. 1, the connecting member 10 is disposed to couple the flange portion 115a and the flange portion 125a, and to couple the flange portion 115b and the flange portion 125b, and is formed of one plate member (metal sheet). The flange portion 115a and the flange portion 125a are end portions on the upper side of the automotive body where the outer member 110 and the inner member 120 are joined, and the flange portion 115b and the flange portion 125b are end portions on the lower side of the automotive body. Further, as illustrated in FIG. 2, the connecting member 10 divides the closed cross-sectional structure of the side sill 100 formed by the outer member 110 and the inner member 120 into two of inner and outer parts. As illustrated in FIG. 2, an outer-side side sill closed cross-sectional structure 31 is formed between the connecting member 10 and the outer member 110, and an inner-side side sill closed cross-sectional structure 33 is formed between the connecting member 10 and the inner member 120.

As illustrated in FIG. 1, the collision energy-absorbing member 20 includes a first collision energy-absorbing member 21 and a second collision energy-absorbing member 23.

The first collision energy-absorbing member 21 is a pair of members that forms a linear load transfer path inclined with respect to a horizontal plane of the automotive body in order to transmit a crashworthiness load input to the outer member 110 toward the vicinity of the corner portions 127 of the inner member 120 in both the upper direction of the automotive body and the lower direction of the automotive body, and absorbs collision energy.

The second collision energy-absorbing member 23 is a member that is disposed on each of the upper side of the automotive body and the lower side of the automotive body of the first collision energy-absorbing member 21, is disposed so as to connect the inner member 120 to the flange portion 115 and the flange portion 125, and absorbs collision energy. The second collision energy-absorbing member 23 may be disposed so as to connect the inner member 120 and the connecting member 10.

In the present embodiment, the collision energy-absorbing member 20 is formed by bending one plate member, and is a member in which the first collision energy-absorbing member 21 and the second collision energy-absorbing member 23 are integrated. That is, end portions of the pair of first collision energy-absorbing members 21 on the outer member 110 side are connected by a load reception portion 25 located near the top portion 111. End portions of the pair of first collision energy-absorbing members 21 on the inner member 120 side are connected to the end portions on the inner member 120 side of the second collision energy-absorbing member 23 via a load transmission portion 27. The load transmission portion 27 is connected via the load transmission portion 27 disposed on each of the upper side of the automotive body and the lower side of the automotive body with respect to the vertical center of the inner member 120. As a result, the collision energy-absorbing member 20 has a substantially M-shaped cross section as a whole by the load reception portion 25, the pair of first collision energy-absorbing members 21, the load transmission portion 27, and the second collision energy-absorbing member 23.

Further, as illustrated in FIG. 2, the connecting member 10 is disposed so as to cross the collision energy-absorbing member 20 at the first collision energy-absorbing members 21. An outer-side EA member closed cross-sectional structure 35 on the outer member 110 side and an inner-side EA member closed cross-sectional structure 37 on the inner member 120 side are formed between the connecting member 10 and the collision energy-absorbing member 20. The outer side of the side sill 100 in the width direction of the automotive body constitutes a double closed cross-sectional structure in which the outer-side EA member closed cross-sectional structure 35 is provided inside the outer-side side sill closed cross-sectional structure 31. The inner side of the side sill 100 constitutes a double closed cross-sectional structure in which the inner-side EA member closed cross-sectional structure 37 is provided inside the inner-side side sill closed cross-sectional structure 33.

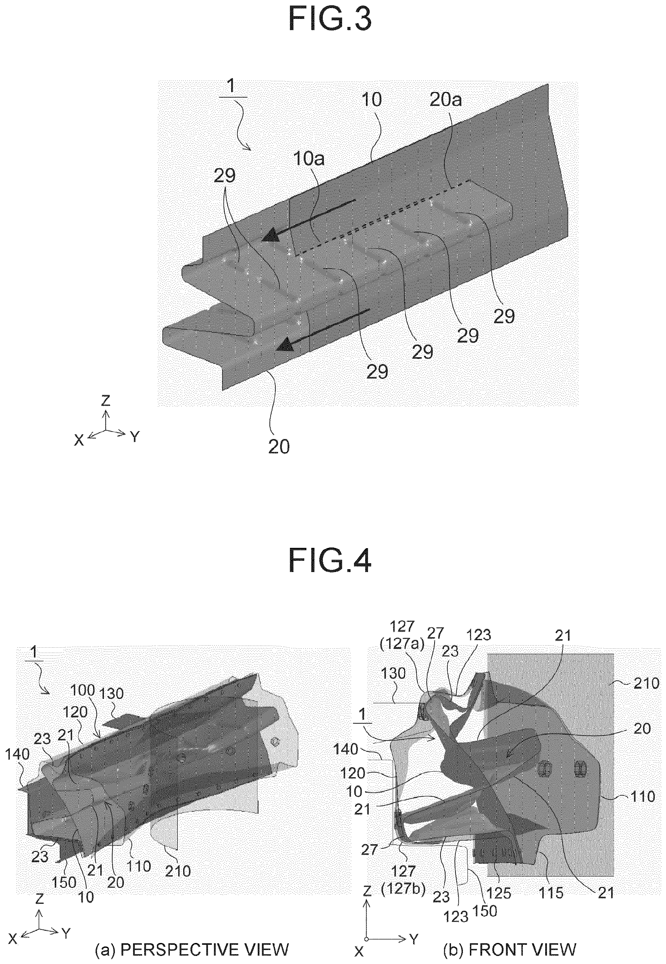

In the present embodiment, as illustrated in FIG. 3 for example, the collision energy-absorbing member 20 and the connecting member 10 are formed with cuts 20a and 10a, are inserted thereinto, and are joined by electric arc welding or the like.

In the present embodiment, the load reception portion 25 is a portion that is joined to the inner surface of the top portion 111 of the outer member 110 via a resin adhesive 41 and receives a crashworthiness load via the outer member 110 and the resin adhesive 41.

The load transmission portion 27 is joined to the inner surface of the top portion 121 of the inner member 120 via a resin adhesive 43. The load transmission portion 27 is a portion that transmits a crashworthiness load input to the outer member 110 and transmitted via the load reception portion 25 and the first collision energy-absorbing member 21 to load-bearing members (non-EA members) such as the floor cross member 130, the battery case 140, and the battery lower cross member 150.

The resin adhesive 41 and the resin adhesive 43 preferably have a thickness of 20 mm or less. However, the load reception portion 25 may be directly joined to the top portion 111 of the outer member 110. Similarly, the load transmission portion 27 may be directly joined to the top portion 121 of the inner member 120.

The functional effects of the internal structure 1 of the side sill according to the present embodiment will be described below with reference to FIG. 4. Note that FIG. 4 illustrates a state of deformation of the collision energy-absorbing member 20 and the connecting member 10 in a case where the pole 210 makes a side impact from the outside of the vehicle in the width direction of the automotive body and a crashworthiness load is input to the side sill 100.

A crashworthiness load is applied to the side sill 100 from the outer side of the automotive body in the width direction of the automotive body. Then, the crashworthiness load is vertically distributed and transmitted to the load-bearing members (non-EA members) such as the floor cross member 130 and the battery case 140 inside the automotive body through the load transfer path that is formed, by the first collision energy-absorbing member 21, in a straight line to be inclined with respect to the horizontal plane of the automotive body.

At this time, as illustrated in FIG. 4, the upper portion of the collision energy-absorbing member 20 is supported by the upper portion of the floor cross member 130 or the battery case 140. The lower portion of the collision energy-absorbing member 20 is supported by the lower portion of the battery case 140 or the battery lower cross member 150. Then, the first collision energy-absorbing member 21 forming the load transfer path on the outer member 110 side is crushed to absorb the collision energy. The outer side of the side sill 100 in the width direction of the automotive body can enhance the crashworthiness energy absorption amount because of the double closed cross-sectional structure (see FIG. 2) in which the outer-side EA member closed cross-sectional structure 35 is provided inside the outer-side side sill closed cross-sectional structure 31.

Thereafter, the first collision energy-absorbing member 21 and the second collision energy-absorbing member 23 on the inner member 120 side are crushed while being supported by the floor cross member 130 and the battery case 140, and the collision energy is further absorbed. The inner side of the side sill 100 can enhance the crashworthiness energy absorption amount because of the double closed cross-sectional structure (see FIG. 2) in which the inner-side EA member closed cross-sectional structure 37 is provided inside the inner-side side sill closed cross-sectional structure 33.

After the first collision energy-absorbing member 21 and the second collision energy-absorbing member 23 are crushed and bent, the load transmission portion 27 is disconnected from the inner surface of the top portion 121 of the inner member 120. Thereafter, the load transmission portion 27 is shifted to each of the upper side of the automotive body and the lower side of the automotive body, and abuts on the corner portions 127 on the upper side of the automotive body and the lower side of the automotive body of the top portion 121 in the inner member 120 or the vicinity of the corner portions 127. The first collision energy-absorbing member 21 and the second collision energy-absorbing member 23 which have been crushed and bent are tensioned to maintain a resistance force against a collision deformation in the width direction of the automotive body. Therefore, the first collision energy-absorbing member 21 and the second collision energy-absorbing member 23 continue to hold the collision energy absorptive properties even after being crushed and bent. Since the corner portions 127 or the vicinity thereof in the inner member 120 are supported by the bent first collision energy-absorbing member 21 and second collision energy-absorbing member 23, the inner member 120 continues to maintain the hat-shaped cross section without being completely crushed. This deformed state is achieved by a structure in which the first collision energy-absorbing member 21 is inclined with respect to the horizontal plane of the automotive body and is connected from the load reception portion 25 toward the vicinity of the corner portions 127.

In that case, the end portion of the collision energy-absorbing member 20 on the upper side of the automotive body and the end portion thereof on the lower side of the automotive body are joined to the connecting member 10. This prevents the development of the bending ridgeline of the substantially M-shaped cross section of the collision energy-absorbing member 20, and crushes the linear first collision energy-absorbing member 21 and the linear second collision energy-absorbing member 23 to enhance the energy absorption efficiency.

As described above, the first collision energy-absorbing member 21 forms a linear load transfer path from the load reception portion 25 toward the load transmission portion 27. As a result, the crashworthiness load input to the outer member 110 is efficiently transmitted to the load-bearing members such as the floor cross member 130 and the battery case 140, crushing the first collision energy-absorbing member 21 is accelerated, and the absorption efficiency of the collision energy can be enhanced.

In addition, end portions 11 (11a, 11b) of the connecting member 10 in the vertical direction of the automotive body are connected to the flange portion 115a and the flange portion 125a on the upper side of the automotive body of the side sill 100 and the flange portion 115b and the flange portion 125b on the lower side of the automotive body of the side sill 100. This prevents the cross section of the side sill 100 from opening vertically and collapsing (prevention of cross-section collapsing) in the event of a side impact with the automotive body to thereby enhance the impact strength.

As a result, it is possible to prevent a reduction in the absorption efficiency of the collision energy due to the cross-section collapsing of the side sill 100.

Further, the first collision energy-absorbing member 21 is divided into the outer member 110 side and the inner member 120 side by the connecting member 10. Then, the two closed cross-sectional structures (outer-side EA member closed cross-sectional structure 35 and inner-side EA member closed cross-sectional structure 37, see FIG. 2) are formed inside the side sill 100. Since the first collision energy-absorbing member 21 is divided by the connecting member 10, the wavelength of buckling of the first collision energy-absorbing member 21 can be shortened. This increases the impact strength of the first collision energy-absorbing member 21, and a larger load can be transmitted.

Further, in the internal structure 1 of the side sill according to the present embodiment, the simple structure using the connecting member 10 and the collision energy-absorbing member 20 can reduce the number of components, leading to the weight reduction.

The vicinity of the corner portions 127 is a portion where the load transmission portion 27 of the collision energy-absorbing member 20 abuts on the inner surface of the inner member 120 directly or via the resin adhesive 43. Specifically, the vicinity of the corner portions 127 is a portion where the floor cross member 130 which is a frame structure member of the automotive body and the battery case 140 are connected to the automotive body side of the inner member 120. In the present embodiment, as illustrated in FIG. 1, the vicinity of the corner portions 127 refers to a region extending from the top portion 121 to the corner portion 127a of the inner member 120 on the upper side of the automotive body and a region extending from the top portion 121 to the corner portion 127b of the inner member 120 on the lower side of the automotive body. However, the vicinity of the corner portions 127 is not limited to the regions extending from the top portion 121 to the corner portions 127, and may be a region extending from the corner portions 127 to the vertical wall portion 123. The load transmission portion 27 is a portion that transmits a crashworthiness load to the load-bearing members (non-EA members). The upper limit of the length of the load transmission portion 27 in the vertical direction of the automotive body is the length of the load-bearing members (non-EA members) connected to the inner member 120 of the side sill 100 in the vertical direction of the automotive body, and the length of the load transmission portion 27 in the vertical direction of the automotive body is preferably at least about one third of the length of the load-bearing members (non-EA members) in the vertical direction of the automotive body.

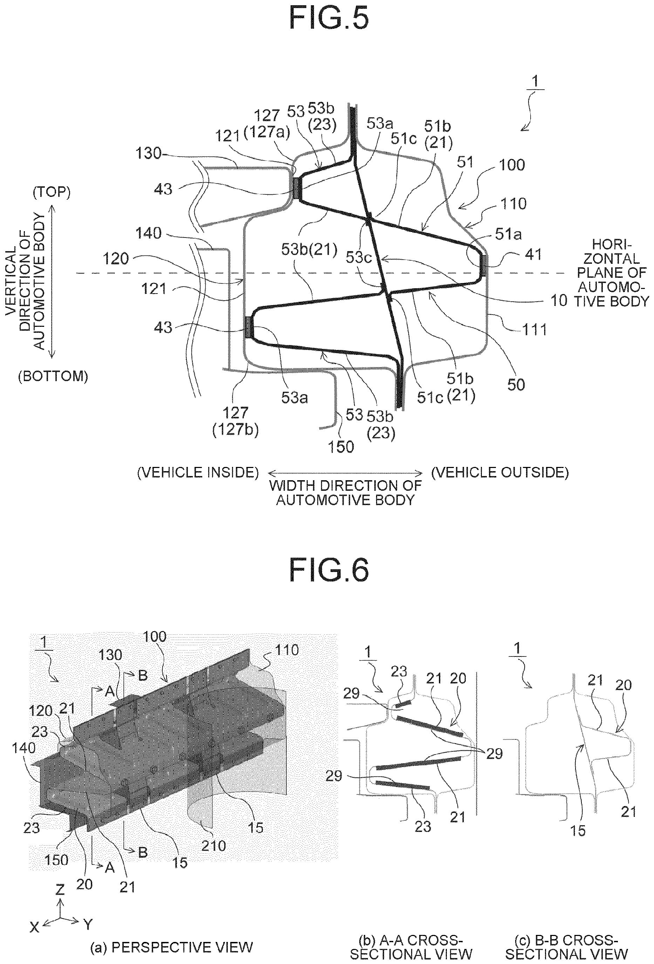

In the foregoing description, the collision energy-absorbing member 20 is formed by bending one plate member, and the first collision energy-absorbing member 21 is integrated with the second collision energy-absorbing member 23. However, as illustrated in FIG. 5, a collision energy-absorbing member according to the present invention may be a collision energy-absorbing member 50 formed of separate plate members such as a hat cross-sectional member 51 on the outer member 110 side and two hat cross-sectional members 53 that are arranged side by side in the vertical direction of the automotive body on the inner member 120 side.

As illustrated in FIG. 5, the hat cross-sectional member 51 has a hat-shaped cross section that is open toward the inside of the vehicle in the width direction of the automotive body. The hat cross-sectional member 51 includes a top portion 51a joined to the inner surface of the top portion 111 of the outer member 110 via the resin adhesive 41, a pair of vertical wall portions 51b inclined with respect to the horizontal plane of the automotive body, and a flange portion 51c joined to the connecting member 10.

Further, as exemplified in FIG. 5, the hat cross-sectional member 53 has a hat-shaped cross section that is open toward the outside of the vehicle in the width direction of the automotive body. The hat cross-sectional member 53 includes a top portion 53a joined to the inner surface of the top portion 121 of the inner member 120 via the resin adhesive 43, vertical wall portions 53b inclined with respect to the horizontal plane of the automotive body, and a flange portion 53c joined to the connecting member 10.

Then, the vertical wall portions 51b of the hat cross-sectional member 51 and the two vertical wall portions 53b of the two hat cross-sectional members 53 on the center side in the vertical direction of the automotive body form the first collision energy-absorbing member 21. In addition, the two vertical wall portions 53b of the two hat cross-sectional members 53 on the upper side of the automotive body and the lower side of the automotive body form the second collision energy-absorbing member 23.

Note that the two hat cross-sectional members 53 illustrated in FIG. 5 may be formed by bending one plate member and integrated.

In the internal structure 1 of the side sill according to the present embodiment, the connecting member 10 is formed of one plate member, and is joined to the first collision energy-absorbing member 21 to divide the load transfer path into the outer member 110 side and the inner member 120 side. However, as illustrated in FIG. 6, a connecting member 15 according to the present invention may include a plurality of strip-shaped plate members extending in the vertical direction of the automotive body, and may be disposed so as to penetrate the first collision energy-absorbing member 21 and the second collision energy-absorbing member 23.

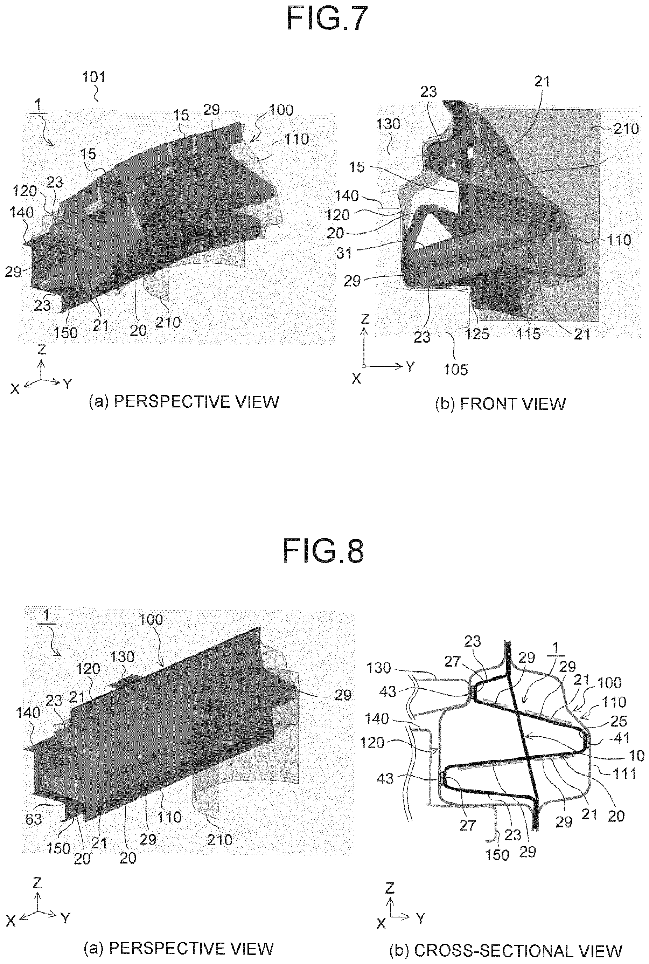

Even with the connecting member 15 including the strip-shaped plate members, as illustrated in FIG. 7, it is possible to prevent the closed cross section of the side sill 100 from opening vertically, and it is possible to axially crush the first collision energy-absorbing member 21 efficiently and prevent a reduction in the absorption efficiency of the collision energy.

Further, as illustrated in FIG. 8, in the first collision energy-absorbing member 21, a groove-shaped portion (for example, a bead portion 29) is preferably formed along the load transfer path.

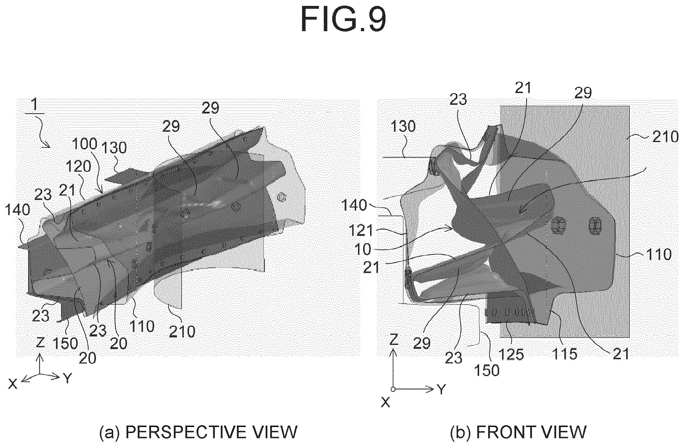

In order to improve the load transfer and the absorption of collision energy by the first collision energy-absorbing member 21, it is necessary to increase deformation energy (deformation resistance) of the first collision energy-absorbing member 21. As illustrated in FIG. 9, the first collision energy-absorbing member 21 is provided with the bead portion 29, which increases the deformation resistance of the first collision energy-absorbing member 21 and increases the deformation energy. As a result, the impact strength of the first collision energy-absorbing member 21 can be raised, leading to the improvement in the crashworthiness energy absorption amount.

Even in the internal structure 1 of the side sill having the strip-shaped connecting member 15 as illustrated in FIG. 6, the crashworthiness load and the crashworthiness energy absorption amount can be improved by forming the bead portion 29 in the first collision energy-absorbing member 21. Also in this case, the bead portion 29 may be divided in the direction along the load transfer path. In this manner, the wavelength of buckling can be controlled by dividing the bead portion and adjusting the length of the bead portion in the direction along the load transfer path.

In the foregoing description, an electric automobile is assumed in which the battery case 140 as the load-bearing member is connected to the inner member 120 of the side sill 100. However, the present invention is not limited to the internal structure of the side sill of the electric automobile, and can be preferably applied to one in which a load-bearing member such as a floor cross member is connected to the upper side of the automotive body and the lower side of the automotive body in the inner member of the side sill.

### [Examples]

A specific test was conducted to verify the functional effects of the internal structure of the side sill according to the present invention, and the results are described below.

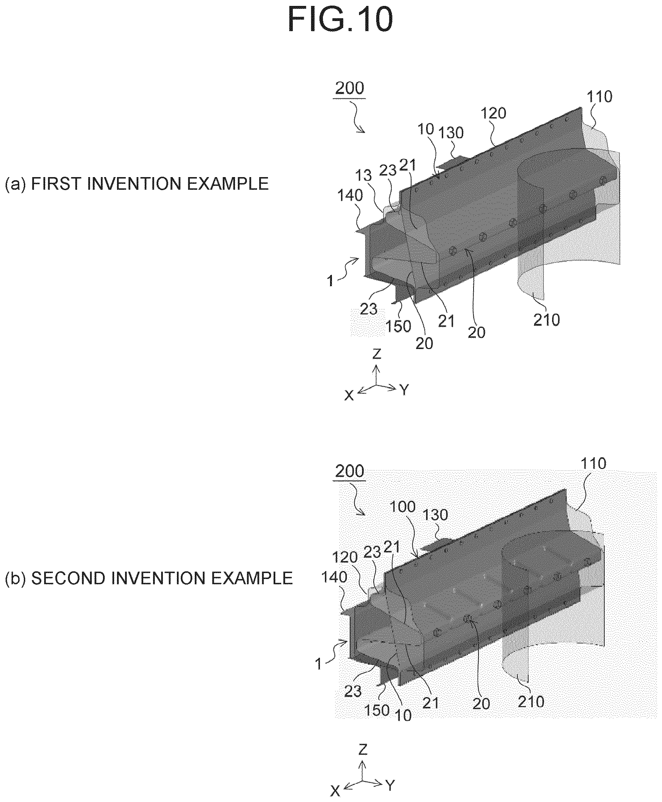

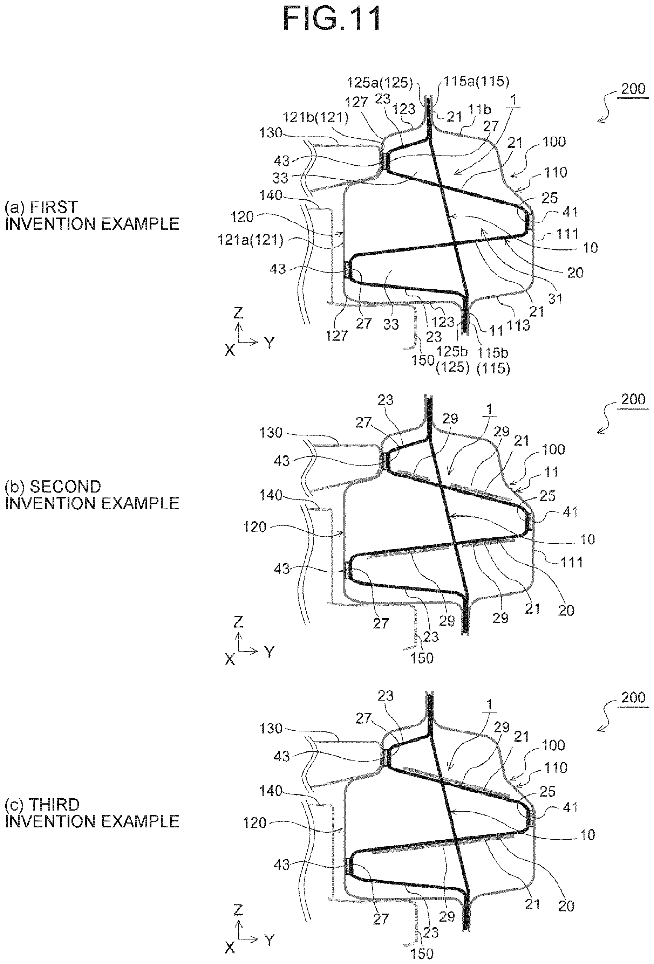

In the present example, as illustrated in FIGS. 10 and 11, a side impact test in which the pole 210 collides, from the outside in the automotive body width direction, with an automotive body partial model 200 including the side sill 100, the floor cross member 130 and the battery case 140 connected to the side sill 100, was conducted to evaluate the impact performance. The side sill 100 includes the internal structure 1 of the side sill including the connecting member 10 and the collision energy-absorbing member 20.

As described in the embodiment of the present invention, the side sill 100 includes the outer member 110 and the inner member 120, and the hat-shaped cross section of the outer member 110 and the hat-shaped cross section of the inner member 120 are opened to face each other. The outer member 110 and the inner member 120 form a closed cross-sectional structure in which the flange portion 115a of the outer member 110 and the flange portion 125a of the inner member 120 are joined, and the flange portion 115b of the outer member 110 and the flange portion 125b of the inner member 120 are joined. In the present example, as illustrated in FIGS. 10 and 11, the automotive body partial model 200 including the internal structure 1 of the side sill satisfying the constituent features of the present invention was defined as the first to third invention examples.

As illustrated in FIGS. 10(a) and 11(a), the first invention example includes the connecting member 10 integrally formed, and the collision energy-absorbing member 20 integrally formed in a substantially M-shaped cross-sectional shape from one plate member.

As illustrated in FIGS. 10(b) and 11(b), the second invention example includes the connecting member 10 integrally formed, and the collision energy-absorbing member 20 integrally formed in a substantially M-shaped cross-sectional shape from one plate member. In the second invention example, the bead portion 29 divided by the connecting member 10 is formed in the first collision energy-absorbing member 21 of the collision energy-absorbing member 20.

As illustrated in FIG. 11(c), the third invention example includes the connecting member 10 integrally formed, and the collision energy-absorbing member 20 integrally formed in a substantially M-shaped cross-sectional shape from one plate member. In the third invention example, the bead portion 29 extending from the outer member 110 side to the inner member 120 side without being divided by the connecting member 10 is formed in the first collision energy-absorbing member 21 of the collision energy-absorbing member 20.

Here, the collision energy-absorbing member 20 in each of the first to third invention examples has one load reception portion 25 that abuts on the inner surface of the top portion 111 of the outer member 110 via the resin adhesive 41, and has two load transmission portions 27 that abut on the inner surface of the top portion 121 of the inner member 120 via the resin adhesive 43.

In the first to third invention examples, each of the side sill 100, the connecting member 10, and the collision energy-absorbing member 20 is prepared using a 1.5 GPa-class high-tensile steel sheet having a sheet thickness of 1.6 mm.

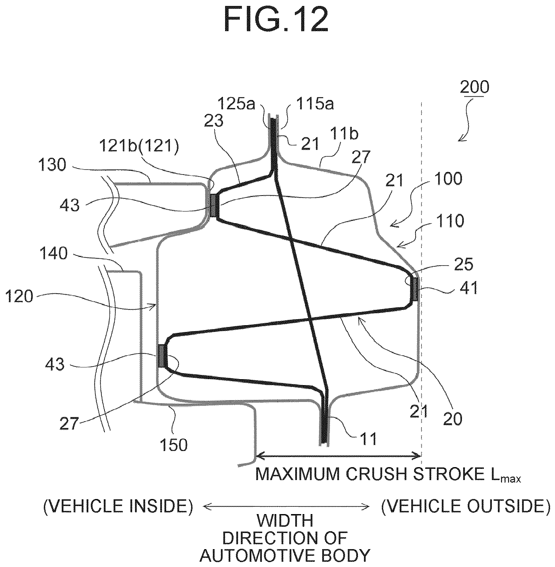

In the present example, the intrusion amount (crush stroke) of the pole 210 having a diameter of 250 mm into the side sill 100 when the pole 210 makes a side impact on the extension of the floor cross member 130 in the longitudinal direction and on the outer member 110 side of the side sill 100, and the crashworthiness energy absorption amount at the time of the side impact of the pole 210 were obtained. Then, an evaluation as to whether or not the intrusion amount of the pole 210 was equal to or less than a maximum crush stroke Lₘₐₓ illustrated in FIG. 12 was conducted. Here, the maximum crush stroke Lₘₐₓ is a horizontal distance from the top portion 111 of the outer member 110 to the battery lower cross member 150 in the width direction of the automotive body.

Note that the actual side impact test using the pole 210 is conducted by causing the automotive body of the automobile to collide with the fixed pole 210 with kinetic energy. However, in the side impact test using the automotive body partial model 200 in the present example, it is replaced with an event of colliding the pole 210 having predetermined kinetic energy with the side sill 100. Here, the kinetic energy of the pole 210 was set to 22 kJ.

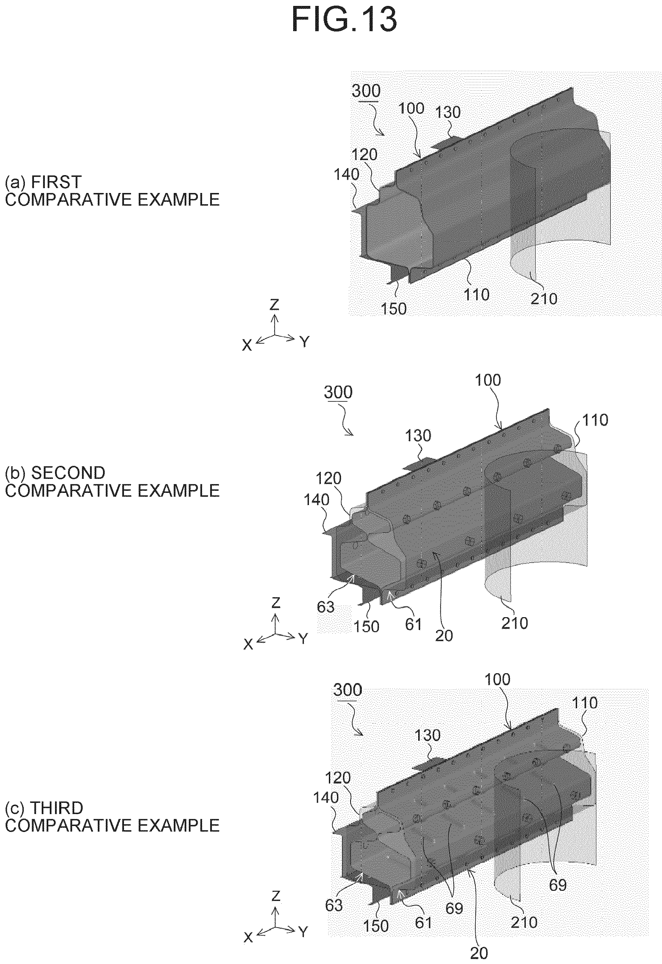

For comparison, as illustrated in FIGS. 13 to 16, an automotive body partial model 300 having an internal structure of a side sill outside the scope of the present invention was used in a comparative example, and was compared and examined with that in the invention examples.

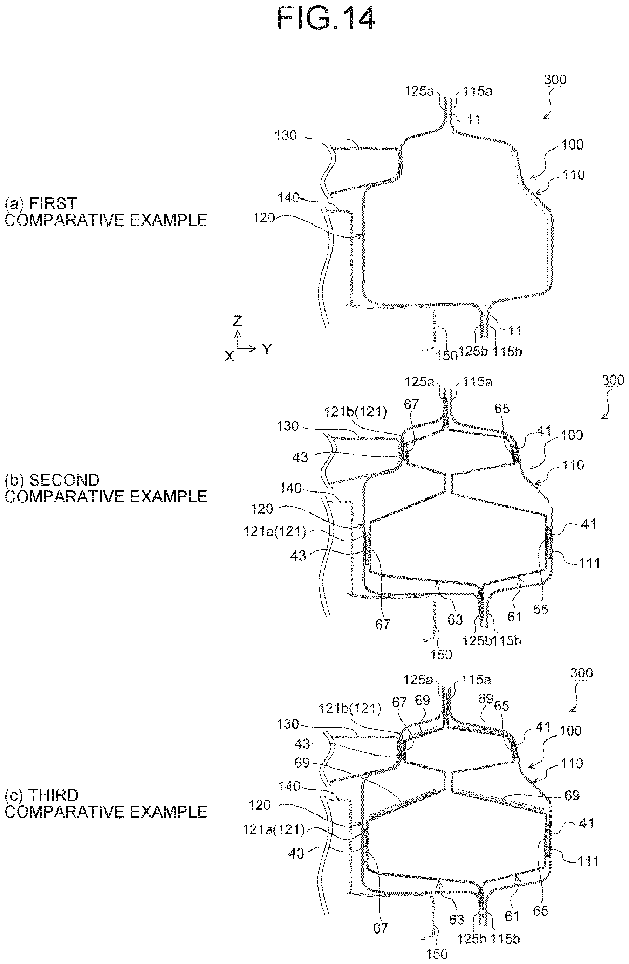

As illustrated in FIGS. 13(a) and 14(a), the first comparative example is an example in which neither the connecting member 10 nor the collision energy-absorbing member 20 (see FIGS. 10 and 11) according to the present invention is disposed inside the side sill 100.

As illustrated in FIGS. 13(b) and 14(b), and FIGS. 13(c) and 14(c), the second and third comparative examples are examples in which two collision energy-absorbing members 61 and 63 having a substantially M-shaped cross section are disposed inside the side sill 100. In the second and third comparative examples, two load reception portions 65 that abut on the inner surface of the top portion 111 of the outer member 110 are provided, and two load transmission portions 67 that abut on the inner surface of the top portion 121 of the inner member 120 are provided.

Further, as with the second and third invention examples, in the third comparative example, a bead portion 69 extending along the vehicle width direction was provided on the upper surface sides of the collision energy-absorbing member 61 and the collision energy-absorbing member 63.

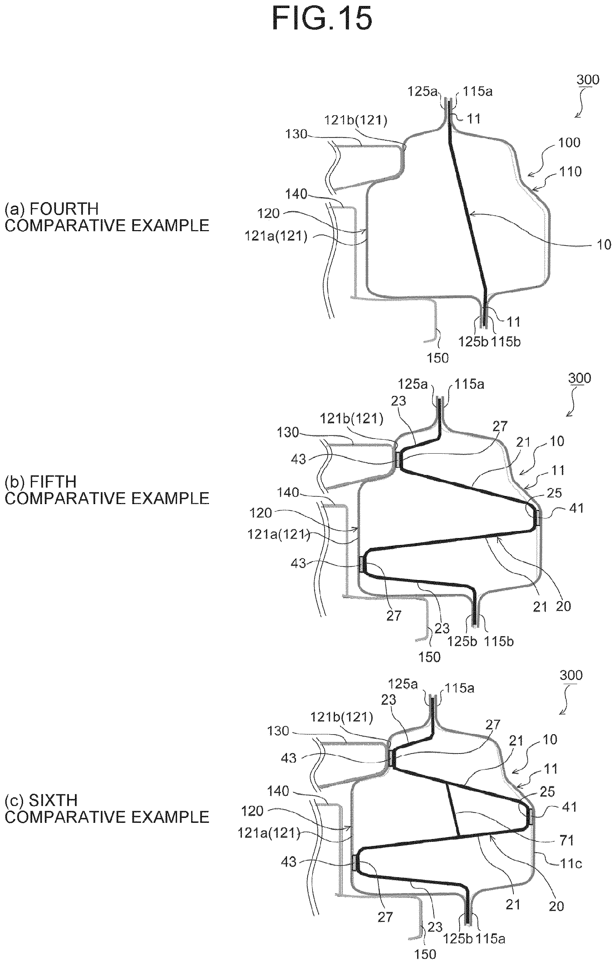

As illustrated in FIG. 15, in the fourth to sixth comparative examples, a part of the connecting member 10 or the collision energy-absorbing member 20 according to the first invention example was disposed.

As illustrated in FIG. 15(a), in the fourth comparative example, only the connecting member 10 of the first invention example was disposed. As illustrated in FIG. 15(b), in the fifth comparative example, only the collision energy-absorbing member 20 of the first invention example was disposed. As illustrated in FIG. 15(c), the sixth comparative example is an example in which a part of the connecting member 10 in the first invention example was left as a connecting member 71 only between the first collision energy-absorbing member 21 on the upper side of the automotive body and the first collision energy-absorbing member 21 on the lower side of the automotive body, and the inner-side EA member closed cross-sectional structure 37 in the first invention example was removed.

Here, in the fifth and sixth comparative examples, as with the first invention example, one load reception portion 25 that abuts on the inner surface of the top portion 111 of the outer member 110 is provided, and two load transmission portions 27 that abut on the inner surface of the top portion 121 of the inner member 120 are provided.

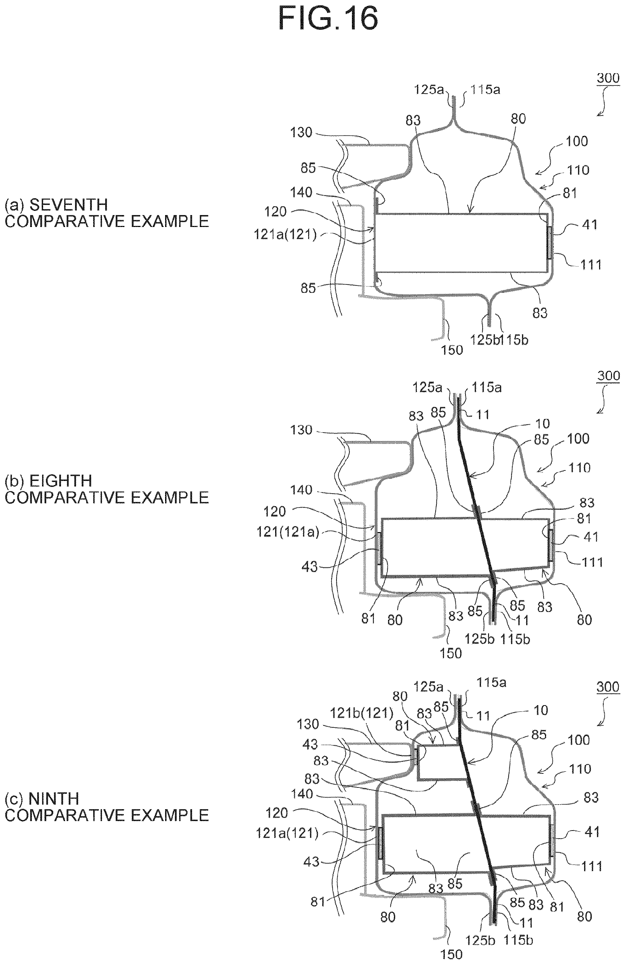

As illustrated in FIG. 16, in the seventh to ninth comparative examples, instead of the collision energy-absorbing member 20 having a substantially M-shaped cross section, a collision energy-absorbing member 80 that has a hat-shaped cross section and includes a top portion 81, a vertical wall portion 83, and a flange portion 85 is used. In the seventh to ninth comparative examples, the vertical wall portion 83 which is a load transfer path from the outer member 110 to the inner member 120 is parallel to the horizontal plane of the automotive body and is not inclined.

As illustrated in FIG. 16(a), in the seventh comparative example, one collision energy-absorbing member 80 having a hat-shaped cross section was disposed without using the connecting member 10. In the seventh comparative example, the top portion 81 of the collision energy-absorbing member 80 is joined to the inner surface of the top portion 111 of the outer member 110 as one load reception portion, a pair of the flange portions 85 is joined to the inner surface of the first top portion 121a of the inner member 120 as the load transmission portion, and a pair of the vertical wall portions 83 is used as the load transfer path.

As illustrated in FIG. 16(b), in the eighth comparative example, one collision energy-absorbing member 80 having a hat-shaped cross section was disposed on each of the outer member 110 side and the inner member 120 side in the closed cross section in the side sill 100 partitioned by the connecting member 10. The top portion 81 of the collision energy-absorbing member 80 on the inner member 120 side is joined to the inner surface of the top portion 121 of the inner member 120 as one load transmission portion.

As illustrated in FIG. 16(b), in the ninth comparative example, a total of three collision energy-absorbing members 80, one on the outer member 110 side and two on the inner member 120 side, were disposed in the closed cross section in the side sill 100 partitioned by the connecting member 10. The top portions 81 of the two collision energy-absorbing members 80 on the inner member 120 side are joined to the inner surface of the top portion 121 of the inner member 120 as two load transmission portions.

In the seventh to ninth comparative examples, the top portion 81 of the collision energy-absorbing member 80 on the outer member 110 side abuts on the inner surface of the top portion 111 of the outer member 110 as one load reception portion.

The relationship between the structures of the collision energy-absorbing member and the connecting member in the first to third invention examples and the first to ninth comparative examples is indicated in Table 1, and the results of the impact evaluation are indicated in Table 2.

**Table 1**

| | Collision energy-absorbing member | | | Presence or absence of connecting member | Bead portion | |
|---|---|---|---|---|---|---|
| | One or more load reception portions outside vehicle (outer member side) | Two or more load transmission portions inside vehicle (inner member side) | Load transfer path | | Presence or absence | Cut |
| First invention example | ○ | ○ | Inclined | ○ | - | - |
| Second invention example | ○ | ○ | Inclined | ○ | ○ | - |
| Third invention example | ○ | ○ | Inclined | ○ | ○ | ○ |
| First comparative example | ○ | - | Inclined | - | - | - |
| Second comparative example | ○ | ○ | Inclined | - | - | - |
| Third comparative example | ○ | ○ | Inclined | - | ○ | - |
| Fourth comparative example | ○ | - | Inclined | ○ | - | - |
| Fifth comparative example | ○ | ○ | Inclined | - | - | - |
| Sixth comparative example | ○ | ○ | Inclined | (○ Partial) | - | - |
| Seventh comparative example | ○ | ○ | Level | - | - | - |
| Eighth comparative example | ○ | - | Level | ○ | - | - |
| Ninth comparative example | ○ | ○ | Level | ○ | - | - |

**Table 2**

| | Crush stroke [mm] | Crashworthiness energy absorption amount [kJ] | Battery protection | Plate thickness [mm] | Steel plate strength | Weight [kg] | Number of parts |
|---|---|---|---|---|---|---|---|
| First invention example | 99 | 19.3 | ○ | 1.6 | 1.5 GPa-class | 5.8 | 2 |
| Second invention example | 84 | 18.8 | ○ | 1.6 | 1.5 GPa- class | 6.0 | 2 |
| Third invention example | 85 | 19.0 | ○ | 1.6 | 1.5 GPa- class | 5.9 | 2 |
| First comparative example | 105 | 9.5 | × | 1.6 | 1.5 GPa- class | 0.0 | 0 |
| Second comparative example | 105 | 12.6 | × | 1.6 | 1.5 GPa- class | 5.8 | 2 |
| Third comparative example | 105 | 15.2 | × | 1.6 | 1.5 GPa-class | 6.1 | 2 |
| Fourth comparative example | 105 | 11.0 | × | 1.6 | 1.5 GPa-class | 1.7 | 1 |
| Fifth comparative example | 105 | 12.2 | × | 1.6 | 1.5 GPa- class | 4.1 | 1 |
| Sixth comparative example | 105 | 10.5 | × | 1.6 | 1.5 GPa- class | 2.2 | 2 |
| Seventh comparative example | 105 | 11.5 | × | 1.6 | 1.5 GPa-class | 2.1 | 1 |
| Eighth comparative example | 105 | 12.1 | × | 1.6 | 1.5 GPa-class | 5.9 | 3 |
| Ninth comparative example | 105 | 12.8 | × | 1.6 | 1.5 GPa- class | 6.3 | 4 |

Table 2 shows that in each of the first to third invention examples, the crush stroke was less than the maximum crush stroke Lₘₐₓ (= 105 mm), and the crashworthiness load input to the outer member 110 was efficiently transmitted to the inner member 120 side.

On the other hand, in each of the first to ninth comparative examples, the crush stroke reaches the maximum crush stroke Lₘₐₓ (= 105 mm). In the first to ninth comparative examples, the collision energy is not sufficiently absorbed, and there is a concern that a crashworthiness load equal to or greater than the loading bearing capacity acts on the floor cross member 130 and the battery case 140 to collapse (see "BATTERY PROTECTION" in Table 2).

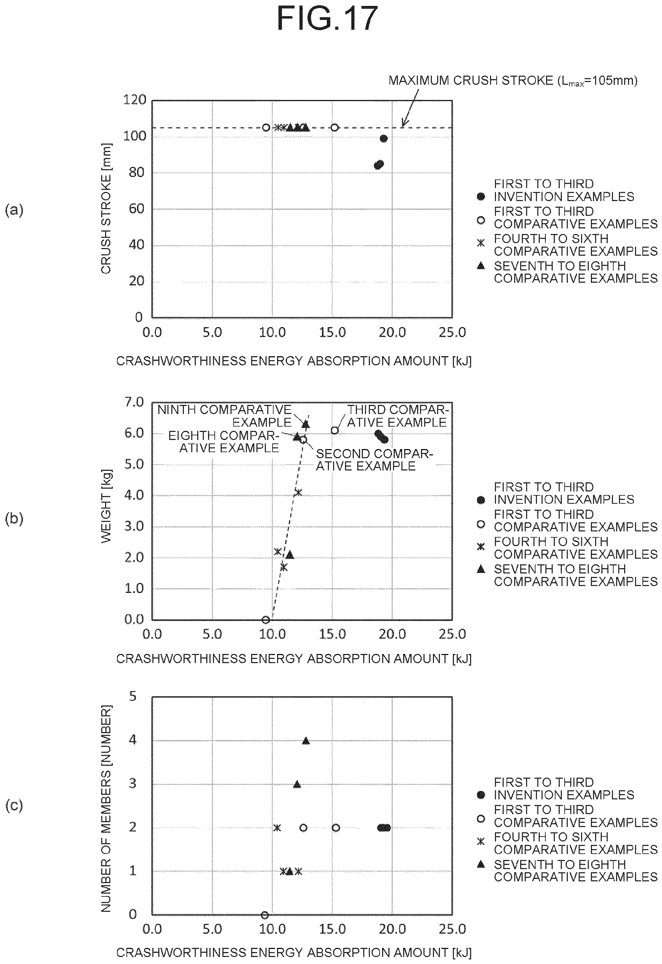

FIG. 17(a) illustrates the relationship between the crashworthiness energy absorption amount and the crush stroke among the results of the side impact test indicated in Table 2. In each of the first to ninth comparative examples, the maximum crush stroke (Lₘₐₓ = 105 mm) was reached, and the crashworthiness energy absorption amount was 9.5 to 15.2 kJ (average 11.9 kJ).

In contrast, in the first to third invention examples, the collision energy-absorbing member 20 absorbed the collision energy (= 22 kJ) of the pole 210 before the crush stroke of the pole 210 reaches the maximum crush stroke Lₘₐₓ (= 105 mm). The crashworthiness energy absorption amount in the first to third invention examples was 18.8 to 19.3 kJ (average 19.0 kJ), which was improved to two times that of the first comparative example (9.5 kJ for a case where no collision energy-absorbing member is disposed in the side sill) and improved to about 1.6 times that of the second to ninth comparative examples (average 12.2 kJ). Since the value in each of the first to third invention examples is equal to or less than the prescribed crush stroke, it is considered that the collision energy absorptive properties are higher than these values.

FIG. 17(b) illustrates the relationship between the crashworthiness energy absorption amount and the weights of the connecting member and the collision energy-absorbing member provided inside the side sill 100 among the results of the side impact test indicated in Table 2. According to the results illustrated in FIG. 17(b), it is found that in the first to ninth comparative examples, the crashworthiness energy absorption amount also increases as the weight of the collision energy-absorbing member and/or the connecting member increases.

A comparison is made between the results of the second, third, eighth, and ninth comparative examples in which weights (about 6 kg or so) equivalent to the weights (5.8 to 6.0 kg) of the collision energy-absorbing member and the connecting member in the first to third invention examples, and the results of the first to third invention examples. Then, the crashworthiness energy absorption amounts in the first to third invention examples were 19.0 kJ (18.8 to 19.3 kJ) on average, which was 44% higher than 13.2 kJ (12.1 to 15.2 kJ) on average of the crashworthiness energy absorption amounts in the second, third, eighth, and ninth comparative examples, and the results that the crashworthiness energy absorption amounts (mass efficiency) per unit weight of the connecting member and the collision energy-absorbing member were high were obtained. This is because in the first to third invention examples, the collision energy-absorbing member 20 disposed in the side sill 100 was efficiently crushed at the time of a side impact, so that the absorption efficiency of the collision energy was enhanced.

FIG. 17(c) illustrates the relationship between the crashworthiness energy absorption amount and the number of components related to the internal structure of the side sill among the results of the side impact test indicated in Table 2. According to the results illustrated in FIG. 17(c), it was shown that although the simple structure is used in the first to third invention examples in which the number of collision energy-absorbing members and the number of connecting members disposed inside the side sill 100 are reduced, the weight reduction can be achieved while a high crashworthiness energy absorption amount is kept.

As described above, according to the internal structure of the side sill of the present invention, it has been shown that even with a simple structure in which the number of components is small, the weight reduction can be achieved while ensuring high collision energy absorptive performance.

### Industrial Applicability

According to the present invention, it is possible to provide an internal structure of a side sill that is capable of preventing an excessive input load from the side sill to a specific component such as a battery case and preventing an increase in the number of components and manufacturing cost while having sufficient collision energy absorptive properties.

### Reference Signs List

- 1: INTERNAL STRUCTURE OF SIDE SILL
- 10: CONNECTING MEMBER
- 10a: CUT
- 11: END PORTION
- 15: CONNECTING MEMBER
- 20: COLLISION ENERGY-ABSORBING MEMBER
- 20a: CUT
- 21: FIRST COLLISION ENERGY-ABSORBING MEMBER
- 23: SECOND COLLISION ENERGY-ABSORBING MEMBER
- 25: LOAD RECEPTION PORTION
- 27: LOAD TRANSMISSION PORTION
- 29: BEAD PORTION
- 31: OUTER-SIDE SIDE SILL CLOSED CROSS-SECTIONAL STRUCTURE
- 33: INNER-SIDE SIDE SILL CLOSED CROSS-SECTIONAL STRUCTURE
- 35: OUTER-SIDE EA MEMBER CLOSED CROSS-SECTIONAL STRUCTURE
- 37: INNER-SIDE EA MEMBER CLOSED CROSS-SECTIONAL STRUCTURE
- 41: RESIN ADHESIVE
- 43: RESIN ADHESIVE
- 50: COLLISION ENERGY-ABSORBING MEMBER
- 51: HAT CROSS-SECTIONAL MEMBER
- 51a: TOP PORTION
- 51b: VERTICAL WALL PORTION
- 51c: FLANGE PORTION
- 53: HAT CROSS-SECTIONAL MEMBER
- 53a: TOP PORTION
- 53b: VERTICAL WALL PORTION
- 53c: FLANGE PORTION
- 61: COLLISION ENERGY-ABSORBING MEMBER
- 63: COLLISION ENERGY-ABSORBING MEMBER
- 65: LOAD RECEPTION PORTION
- 67: LOAD TRANSMISSION PORTION
- 69: BEAD PORTION
- 71: CONNECTING MEMBER
- 80: COLLISION ENERGY-ABSORBING MEMBER
- 81: TOP PORTION
- 83: VERTICAL WALL PORTION
- 85: FLANGE PORTION
- 100: SIDE SILL
- 110: OUTER MEMBER
- 111: TOP PORTION
- 113: VERTICAL WALL PORTION
- 115: FLANGE PORTION
- 115a: FLANGE PORTION
- 115b: FLANGE PORTION
- 120: INNER MEMBER
- 121: TOP PORTION
- 121a: FIRST TOP PORTION
- 121b: SECOND TOP PORTION
- 123: VERTICAL WALL PORTION
- 125: FLANGE PORTION
- 125a: FLANGE PORTION
- 125b: FLANGE PORTION
- 127: CORNER PORTION
- 127a: CORNER PORTION
- 127b: CORNER PORTION
- 130: FLOOR CROSS MEMBER
- 140: BATTERY CASE
- 150: BATTERY LOWER CROSS MEMBER
- 200: AUTOMOTIVE BODY PARTIAL MODEL (INVENTION EXAMPLE)
- 210: POLE
- 300: AUTOMOTIVE BODY PARTIAL MODEL (COMPARATIVE EXAMPLE)

## Claims

1. An internal structure of a side sill, comprising:
an outer member extending in a front-rear direction of an automotive body and having a hat-shaped cross section that is open toward an inside of a vehicle in a width direction of the automotive body;
an inner member having a hat-shaped cross section that is open toward an outside of the vehicle in the width direction of the automotive body;
a closed cross-sectional structure formed by joining an end portion of each of the outer member and the inner member on an upper side of the automotive body and an end portion of each of the outer member and the inner member on a lower side of the automotive body while an open side of the outer member and an open side of the inner member facing each other;
a connecting member disposed so as to connect the end portion of each of the outer member and the inner member on the upper side of the automotive body and the end portion of each of the outer member and the inner member on the lower side of the automotive body; and
a collision energy-absorbing member configured to absorb collision energy while transmitting a crashworthiness load input to the outer member to the inner member side, the collision energy-absorbing member including:
a pair of first collision energy-absorbing members configured to form a linear load transfer path inclined with respect to a horizontal plane of the automotive body to transmit the crashworthiness load input to the outer member toward a corner portion of the inner member in both an upper direction of the automotive body and a lower direction of the automotive body or a vicinity of the corner portion, and absorb the collision energy; and
a second collision energy-absorbing member disposed in the first collision energy-absorbing member on each of an upper side of the automotive body and a lower side of the automotive body, and configured to connect the inner member and the connecting member or the end portion, and absorb the collision energy.

2. The internal structure of the side sill according to claim 1, wherein the collision energy-absorbing member is formed by bending one plate member, and is a member in which the first collision energy-absorbing member and the second collision energy-absorbing member are integrated.

3. The internal structure of the side sill according to claim 1, wherein the first collision energy-absorbing member has a hat-shaped cross section that is open toward the inside of the vehicle in the width direction of the automotive body, and includes a pair of vertical wall portions inclined with respect to the horizontal plane of the automotive body.

4. The internal structure of the side sill according to claim 1, wherein
the second collision energy-absorbing member includes two members having a hat-shaped cross section that are open toward the outside of the vehicle in the width direction of the automotive body and arranged side by side in a vertical direction of the automotive body,
two vertical wall portions on a center side in the vertical direction of the automotive body, among vertical wall portions of the two members having a hat-shaped cross section, form a part of the first collision energy-absorbing member, and
two vertical wall portions on the upper direction of the automotive body and the lower direction of the automotive body, among the vertical wall portions of the two members having a hat-shaped cross section, form the second collision energy-absorbing member.

5. The internal structure of the side sill according to any one of claims 1 to 4, wherein the connecting member is made of one plate member, and is joined to the first collision energy-absorbing member to divide the load transfer path into the outer member side and the inner member side.

6. The internal structure of the side sill according to any one of claims 1 to 4, wherein the connecting member includes a plurality of strip-shaped plate members extending in the vertical direction of the automotive body, and is disposed so as to penetrate the first collision energy-absorbing member and the second collision energy-absorbing member.

7. The internal structure of the side sill according to any one of claims 1 to 6, wherein the first collision energy-absorbing member has a groove-shaped portion formed along the load transfer path.
